Europäisches Patentamt

European Patent Office

Office européen des brevets

(19)

(11) Veröffentlichungsnummer: **0 162 188**
**B1**

(12) # EUROPÄISCHE PATENTSCHRIFT

(45) Veröffentlichungstag der Patentschrift:
**26.10.88**

(21) Anmeldenummer: **85100655.1**

(22) Anmeldetag: **23.01.85**

(51) Int. Cl.⁴: **G 01 B 11/24**

(54) **Prüfvorrichtung für rollfähige Schäfte.**

(30) Priorität: **23.03.84 DE 3410654**

(43) Veröffentlichungstag der Anmeldung:
**27.11.85 Patentblatt 85/48**

(45) Bekanntmachung des Hinweises auf die Patenterteilung:
**26.10.88 Patentblatt 88/43**

(84) Benannte Vertragsstaaten:
**CH DE FR GB LI**

(56) Entgegenhaltungen:
**CH - A - 506 779**
**DE - A - 2 945 456**
**FR - A - 2 430 594**
**FR - A - 2 493 514**

(73) Patentinhaber: **BELZER-DOWIDAT GMBH**
**Werkzeug-Union, Hastener Strasse 4-8,**
**D-5600 Wuppertal (DE)**

(72) Erfinder: **Fabjek, Klaus, Hahnstrasse 3,**
**D-5650 Solingen 1 (DE)**
Erfinder: **Hannemann, Peter, Loborner Strasse 14,**
**D-5630 Remscheid (DE)**
Erfinder: **Vedder, Klaus, Dowidat-Siedlung 5,**
**D-5630 Remscheid 11 (DE)**

(74) Vertreter: **Selting, Günther, Dipl.-Ing. et al,**
**Deichmannhaus am Hauptbahnhof, D-5000 Köln 1 (DE)**

## Beschreibung

Bei der Herstellung von Schäften, Stangen, Stäben und dgl. können Verformungen und Abweichungen auftreten, die dazu führen, dass die genannten Produkte entweder eine Nachbehandlung erfahren oder als Ausschuss fortgeworfen werden müssen. Beispielsweise werden die aus Stahl bestehenden Schäfte für Schraubendreher einem Härtevorgang oder anderen thermischen Behandlungen unterzogen, bei denen sie sich verziehen können, so dass sie ihre gerade Form verlieren. Derartige Schäfte müssen manuell aussortiert werden und diejenigen Schäfte, die verbogen sind, werden in einem Nachbehandlungsvorgang gerichtet. Die anderen Schäfte, deren Abweichungen von der Idealform innerhalb vorgegebener Toleranzgrenzen liegen, werden dagegen ohne jede Nachbehandlung weiterverarbeitet. Das Prüfen und Aussortieren der Schäfte ist eine mühsame und kostenaufwendige Arbeit.

FR-A-2 430 594 beschreibt eine Prüfvorrichtung für rollfähige Schäfte, bei der die Schäfte über zwei Schienen rollen, zwischen denen eine Detektorvorrichtung zur Ermittlung von Ungleichmässigkeiten der Schäfte angeordnet ist. Die Detektorvorrichtung besteht entweder aus einer Kontaktschiene, mit der die Schäfte, sofern sie fehlerhaft sind, beim Abrollen in Berührung kommen, oder aus einem Laserstrahl, der durch abrollende defekte Schäfte unterbrochen wird. Die Aufgabeeinrichtung weist ein Revolverrad auf, das aus einem Magazin einzelne Schäfte entfernt und diese Schäfte einer kippbaren Wanne zuführt, die gekippt werden kann, um einen darin enthaltenen Schaft auf die Messstrecke auszuwerfen.

Bei der bekannten Prüfvorrichtung rollen die einzelnen Schäfte nacheinander auf den Schienen ab. Sind die Schäfte durchgebogen, dann ergibt sich ein unrunder Ablauf, wobei ein Teil des Schaftes eine Exzenterbewegung um die Rollachse ausführt. Dieser Teil gelangt bei jeder vollen Umdrehung einmal in den Bereich des Strahles, der hierdurch unterbrochen wird. Die Strahlunterbrechung zeigt, dass die Unrundheit des Gegenstandes jenseits der tolerierbaren Grenze liegt. Die Aufgabevorrichtung ist bei der bekannten Prüfvorrichtung aufwendig, weil sie mehrere bewegbare Organe aufweist. Ausserdem fallen die Schäfte aus der Aufgabevorrichtung auf die Schienen, wobei sie zurückfedern und sich schrägstellen können. Die Schäfte werden nicht mit hinreichender Sicherheit in eine definierte Ausgangsposition zum Abrollen auf den Schienen gebracht. Dadurch können Fehlerkennungen auftreten.

Der Erfindung liegt die Aufgabe zugrunde, eine Prüfvorrichtung der im Oberbegriff des Patentanspruchs 1 angegebenen Art so auszubilden, dass die Schäfte in definierter Weise auf den Schienen abrollen.

Die Lösung dieser Aufgabe erfolgt erfindungsgemäss mit den Merkmalen des Patentanspruchs 1.

Mit der erfindungsgemässen Prüfvorrichtung können Schäfte jeglicher Art auf Rundheit geprüft werden, soweit diese Schäfte rollfähig sind. Dies bedeutet, dass die Schäfte an mindestens zwei Stellen ihrer Länge einen runden Querschnitt haben müssen.

Diese runden Stellen werden auf die Schienen aufgesetzt, so dass der Schaft auf den Schienen abrollen kann. Die Schäfte brauchen nicht über ihre gesamte Länge gleichbleibenden Querschnitt zu haben. Schäfte, die mit der Prüfvorrichtung sortiert werden können, sind beispielsweise die Schäfte von Schraubendrehern, Bohrer, Stäbe, Verlängerungsstangen und andere Teile, die in der Lage sind, über eine Schräge abzurollen.

Gemäss einer bevorzugten Ausführungsform der Erfindung ist vorgesehen, dass vor dem abfallenden Messabschnitt ein stärker geneigter Beschleunigungsabschnitt angeordnet ist. Die Schäfte rollen ausschliesslich durch Schwerkraftwirkung durch die Prüfstrecke. Sie werden zunächst auf den Beschleunigungsabschnitt gebracht, in dem sie eine gewisse Rollgeschwindigkeit erreichen. Der an dem Beschleunigungsabschnitt anschliessende Messabschnitt hat eine solche Neigung, dass die Schäfte in ihm mit im wesentlichen konstanter Geschwindigkeit abrollen, also weder beschleunigt noch verlangsamt werden. Nach Verlassen des Messabschnitts können die Schäfte in einem ansteigenden Bremsabschnitt abgebremst bzw. auf eine langsamere Rollgeschwindigkeit gebracht werden.

Der Strahlungssender und der Strahlungsempfänger müssen imstande sein, einen scharfgebündelten konzentrierten Strahl zu erzeugen, um Unterbrechungen dieses Strahles festzustellen. Sender und Empfänger können beispielsweise mit Infrarotstrahlung, kohärentem Licht, oder Laserstrahlung arbeiten. Diffuse Lichtstrahlung eignet sich wegen der unzureichenden Bündelung im allgemeinen nicht.

Im folgenden wird unter Bezugnahme auf die Zeichnungen ein Ausführungsbeispiel der Erfindung näher erläutert.

Es zeigen:

Fig. 1 eine Draufsicht der Prüfvorrichtung,

Fig. 2 eine Ansicht der Prüfvorrichtung aus Richtung des Pfeiles II der Fig. 1 und

Fig. 3 einen Schnitt entlang der Linie III-III der Fig. 1.

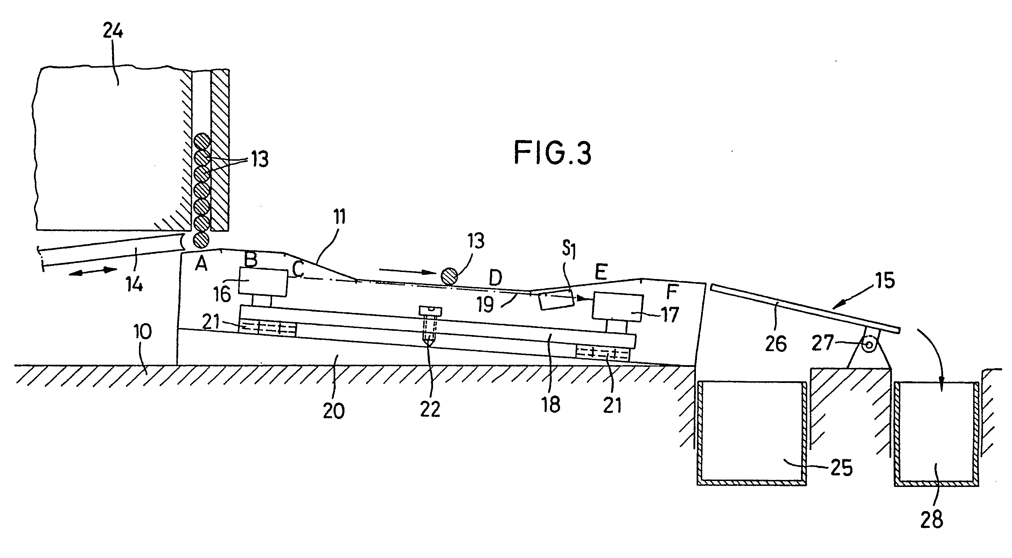

Die Prüfvorrichtung weist eine Basisplatte 10 auf, auf der zwei parallele Schienen 11, 12 mit gegenseitigem Abstand befestigt sind. Die Oberkanten der Schienen 11, 12 haben den in Fig. 3 gezeigten Verlauf. Am Aufgabeende befindet sich ein erster Abschnitt A, der in Laufrichtung der Schäfte ansteigt. Jeder Schaft 13, der auf die Prüfstrecke gebracht werden soll, muss von einem Schieber 14 zunächst bis zum Ende des Abschnitts A hochgeschoben werden. An den Abschnitt A schliesst sich ein in Laufrichtung (nach rechts) geringfügig abfallender Abschnitt B an, auf dem der Schaft zunächst langsam abrollt. Der Schaft 13 gelangt danach auf den Beschleunigungsabschnitt C, der eine grössere Neigung als der Abschnitt B hat, und schliesslich auf den Messabschnitt D, der die eigentliche Prüfstrecke bildet. Im Messabschnitt D haben die Oberkanten der Schienen 11, 12 ein geringeres Gefälle als im Beschleunigungsabschnitt C. Das Gefälle im Messabschnitt D ist so bemessen, dass die Schäfte diesen Messabschnitt mit im wesentlichen konstanter Geschwindigkeit durchlaufen. Im Anschluss an den Messabschnitt D ist ein Bremsabschnitt E vorgesehen, in dem die Oberkanten der Schienen ansteigen. An dem Bremsabschnitt E schliesst sich ein Abschnitt F an, der zu der Sortierweiche 15 führt.

Zwischen den Schienen 11, 12 ist die Sende- und Empfangseinrichtung angeordnet. Diese besteht aus einem Strahlungssender 16 und einem Strahlungsempfänger 17, die an einem gemeinsamen Halter 18 angeordnet sind. Der vom Strahlungssender ausgehende und auf den Strahlungsempfänger 17 gerichtete Strahl 19 verläuft parallel zu derjenigen Ebene, die durch die Oberkanten der Schienen 11, 12 im Messabschnitt D gebildet wird, und zwar mit einem geringen Abstand von Bruchteilen eines Millimeters unterhalb dieser Ebene. Da die Schienenoberkanten im Messabschnitt D schräg verlaufen, ist auch der plattenförmige Halter 18 auf einem schrägen Sockel 20 angebracht. Um den Abstand des Strahles 19 von der Ebene der Schienenoberkanten im Messabschnitt D verstellen zu können, ist der plattenförmige Halter 18 an seiner einen Längskante über Gelenke 21 mit dem Sockel 20 verbunden, während in der Nähe der anderen Längskante eine Stützschraube 22 vorgesehen ist, mit der sich der Halter an dieser Längskante auf dem Sockel 20 abstützt. Durch Drehen der Stützschraube 22 wird der Halter um die Achse der Gelenke 21 geschwenkt, wodurch Strahlungssender 16 und Strahlungsempfänger 17 gemeinsam vertikal bewegt werden. Die Ausrichtung des Strahlungssenders 16 auf den Strahlungsempfänger 17 bleibt bei diesem Verstellvorgang erhalten. Beim Drehen der Stützschraube 22 wird lediglich die Höhe des Strahles 19 in bezug auf die Schienen 11, 12 verändert.

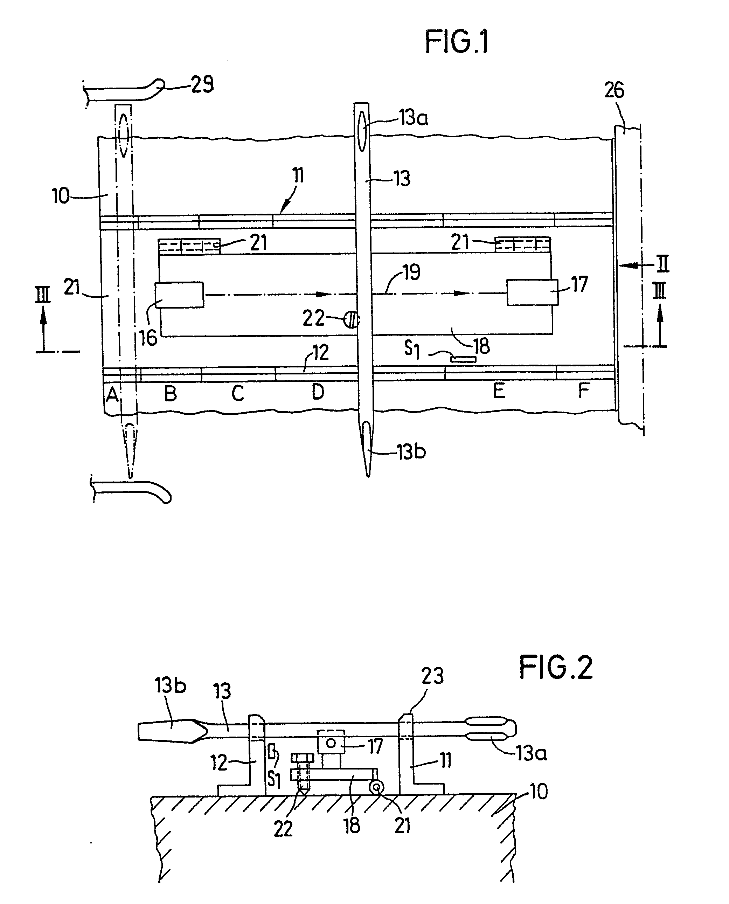

Bei dem vorliegenden Ausführungsbeispiel bestehen die zu prüfenden Schäfte 13 aus Schraubendreherschäften, die an ihren beiden Enden unrunde Abschnitte 13a, 13b aufweisen, jedoch zwischen diesen unrunden Abschnitten zylindrisch sind. Diese Schäfte 13 werden so auf die Schienen 11, 12 aufgesetzt, dass die unrunden Abschnitte 13a und 13b aussen liegen, während der zylindrische Bereich auf den Schienen abrollt. Wie Fig. 2 zeigt, sind die Innenseiten der Schienen 11, 12 an den Oberkanten abgeschrägt, so dass sich sehr schmale Laufflächen 23 ergeben.

Die Schäfte 13 sind in einem Magazin 24 (Fig. 3) übereinander gestapelt. Das Auslassende des Magazins 24 befindet sich über dem Abschnitt A. Der unterste Schaft, der auf dem Abschnitt A ruht, wird von dem Schieber 14 bei dessen Vorwärtsbewegung erfasst und auf den Abschnitt B hochgeschoben. Der Schieber 14 kehrt danach in seine (linke) Ruhestellung zurück, so dass die Säule der in dem Magazin 24 befindlichen Schäfte 13 auf den Abschnitt A der Schienen 11, 12 absinken kann.

Der quer auf den beiden Schienen 11, 12 aufliegende Schaft 13, der auf diesen Schienen abrollt, unterbricht den Strahl 19 nicht, wenn er exakt gerade, d.h. nicht durchgebogen, ist. In diesem Fall stellt der Strahlungsempfänger 17 während des Durchlaufs des Schaftes keine Strahlungsunterbrechung fest und die Sortierweiche 15 wird durch den berührungslosen Näherungsschalter $S_1$ in eine Stellung gebracht, in der der den Abschnitt F der Schienen 11, 12 verlassende Schaft in einen Gut-Kanal 25 fällt.

Bei dem vorliegenden Ausführungsbeispiel besteht die Sortierweiche 15 aus einer Klappe 26, die um ein horizontales Gelenk 27 herum schwenkbar ist und in dem einen Schwenkzustand mit ihrem freien Ende zwischen die Schienen 11, 12 ragt. In dieser einen Endstellung werden die den Abschnitt F verlassenden Schäfte von der Klappe 26 aufgefangen und über den Gut-Kanal 25 hinweggeleitet, um in einen Schlecht-Behälter 28 zu fallen. Wird der Strahl 19 während des Durchlaufs eines Schaftes nicht unterbrochen, dann wird die Klappe 26 gesteuert durch $S_1$ (im Uhrzeigersinne) hochgeschwenkt, so dass der den Abschnitt F verlassende Schaft in den Gut-Kanal 25 fallen kann. Nur solche Schäfte fallen in den Gut-Kanal, bei denen die Klappe 26 infolge des Ausbleibens einer Unterbrechung des Strahles 19 angehoben wurde und die ordnungsgemäss über den Endabschnitt F gerollt sind. Diese beiden Bedingungen müssten erfüllt sein.

Zum seitlichen Führen der Schäfte 13 beim Aufsetzen auf die Schienen 11, 12 dienen seitliche Führungsleisten 29 (Fig. 1).

Bei dem vorliegenden Ausführungsbeispiel ist eine einzige Sende- und Empfangseinrichtung 16, 17, die einen Strahl 19 erzeugt, zwischen den Schienen 11, 12 angeordnet. Es ist auch möglich, mehrere solcher Sende- und Empfangseinrichtungen zwischen den Schienen und/oder eine oder mehrere solcher Sende- und Empfangseinrichtungen ausserhalb der Schienen vorzusehen. In jedem Fall verläuft parallel zur Abrollebene und dicht unter dieser ein scharfgebündelter Strahl, der dann, wenn die Durchbiegung des Schaftes das zulässige Mass überschreitet, unterbrochen wird. Teile, deren Durchbiegung das akzeptierbare Mass übersteigt, tauchen mit ihrem Schlag beim Abrollen in den Strahl ein.

Damit die Einrichtung auf unterschiedliche Schaftlängen eingestellt werden kann, sind die Schienen 11, 12 auf der Basisplatte 10 in Querrichtung verstellbar. Die Schäfte liegen in allen Abschnitten der Schienen 11, 12 horizontal.

**Patentansprüche**

1. Prüfvorrichtung für rollfähige Schäfte, mit einer Prüfstrecke aus zwei parallelen Schienen (11, 12),

einer die Schäfte (13) einzeln auf ein Aufgabeende der Schienen (11, 12) aufgebenden Aufgabevorrichtung,

einer längs der Prüfstrecke verlaufenden Sende- und Empfangseinrichtung aus einem Strahlungssender (16), der einen zur Ebene der Oberkanten der Schienen (11, 12) im wesentlichen parallelen Strahl (19) erzeugt, und einem Strahlungsempfänger (17), auf den der Strahl gerichtet ist

und einer Sortierweiche (15), die von dem Strahlungsempfänger (17) in Abhängigkeit von Strahlunterbrechungen durch den auf den Schienen (11, 12) rollenden Schaft (13) betätigt wird,

wobei die Schienen (11, 12) einen schräg abfallenden Messabschnitt (D) bilden, dadurch gekennzeichnet,

dass über dem Aufgabeende der Schienen (11, 12) ein Magazin (24) angeordnet ist, dessen unterster Schaft auf den Schienen (11, 12) aufliegt,

dass die Schienen in dem Abschnitt (A), in dem der unterste Schaft des Magazins (24) auf ihnen aufliegt, in Laufrichtung der Schäfte ansteigen,

und dass ein Schieber (14) den untersten Schaft des Magazins (24) auf dem ansteigenden Abschnitt (A) bis zu einem in Transportrichtung schräg abfallenden Abschnitt (B) der Schienen (11, 12) vorschiebt.

2. Prüfvorrichtung nach Anspruch 1, dadurch gekennzeichnet, dass vor dem Messabschnitt (D) ein stärker geneigter Beschleunigungsabschnitt (C) angeordnet ist.

3. Prüfvorrichtung nach Anspruch 2, dadurch gekennzeichnet, dass hinter dem Messabschnitt (D) ein ansteigender Bremsabschnitt (E) angeordnet ist.

4. Prüfvorrichtung nach einem der Ansprüche 1 bis 3, dadurch gekennzeichnet, dass der Strahlungssender (16) und der Strahlungsempfänger (17) zwischen den Schienen (11, 12) angeordnet sind.

5. Prüfvorrichtung nach einem der Ansprüche 1 bis 4, dadurch gekennzeichnet, dass der Strahlungssender (16) und der Strahlungsempfänger (17) auf einem gemeinsamen Halter (18) befestigt sind, der in der Höhe verstellbar ist.

## Claims

1. Testing device for rotatable shafts, comprising a testing track consisting of two parallel rails (11, 12),

a supplying means for supplying the shafts (13) separately onto a supplying end of the rails (11, 12),

a transmitting and receiving means extending along said testing track, consisting of a beam transmitter (16) generating a beam (19) substantially parallel to the plane of the upper edges of the rails (11, 12), and of a beam receiver (17) onto which said beam is directed,

and a sorting switch (15) being actuated by the beam receiver (17) in dependence of beam interruptions by the shaft (13) rolling on the rails (11, 12),

wherein the rails (11, 12) form an obliquely declining measuring section (D), characterized in that above the supplying end of the rails (11, 12) there is arranged a magazine (24) the lowermost shaft of which rests on the rails (11, 12),

in that the rails rise in the travelling direction of the shafts in the section (A) in which the lowermost shaft of the magazine (24) rests on the rails,

and in that a slider (14) advances the lowermost shaft of the magazine (24) on the rising section (A) to a section (B) of the rails (11, 12) obliquely declining in transport direction.

2. Testing device according to claim 1, characterized in that before the measuring section (D) there is arranged a more inclined acceleration section (C).

3. Testing device according to claim 2, characterized in that behind the measuring section (D) there is arranged a rising braking section (E).

4. Testing device according to any one of claims 1 to 3, characterized in that the beam transmitter (16) and the beam receiver (17) are arranged between the rails (11, 12).

5. Testing device according to any one of claims 1 to 4, characterized in that the beam transmitter (16) and the beam receiver (17) are fastened to a common holder (18) which is height-adjustable.

## Revendications

1. Dispositif de contrôle pour tiges pouvant rouler, comprenant une piste de contrôle formée de deux rails parallèles (11, 12), un dispositif d'alimentation délivrant les tiges (13) une à une sur une extrémité de chargement de ces rails (11, 12), un appareil d'émission et réception s'étendant le long de la piste de contrôle et formé d'un émetteur de rayonnement (16) qui produit un faisceau (19) essentiellement parallèle au plan du bord supérieur des rails (11, 12) et d'un récepteur de rayonnement (17) sur lequel est dirigé ce faisceau et un aiguillage de triage (15) qui est actionné par le récepteur de rayonnement (17) en fonction d'interruptions du rayonnement par la tige (13) roulant sur les rails (11, 12), ces rails (11, 12) offrant une section de mesure (D) descendant de façon inclinée, caractérisé en ce qu'il est prévu, disposé au-dessus de l'extrémité de chargement des rails (11, 12), un magasin (24) dont la tige inférieure repose sur les rails (11, 12), en ce que, dans la section (A) sur laquelle cette tige inférieure du magasin (24) repose sur ces rails, ceux-ci s'élèvent suivant la direction de déplacement des tiges et en ce qu'un coulisseau (14) pousse en avant la tige inférieure du magasin (24) sur cette section montante (A) et jusqu'à une section (B) des rails (11, 12) qui descend de façon inclinée suivant la direction de transport.

2. Dispositif de contrôle suivant la revendication 1, caractérisé en ce qu'il est prévu, disposée avant la section de mesure (D), une section d'accélération (C) plus fortement inclinée.

3. Dispositif de contrôle suivant la revendication 2, caractérisé en ce qu'il est prévu, disposée après la section de mesure (D), une section de frainage (E) qui s'élève.

4. Dispositif de contrôle suivant l'une des revendications 1 à 3, caractérisé en ce que l'émetteur de rayonnement (16) et le récepteur de rayonnement (17) sont disposés entre les rails (11, 12).

5. Dispositif de contrôle suivant l'une des revendications 1 à 4, caractérisé en ce que l'émetteur de rayonnement (16) et le récepteur de rayonnement (17) sont fixés sur un support commun (18) qui est réglable en hauteur.

0 162 188

# FIG.1

# FIG.2

5

FIG.3